(19) **Europäisches Patentamt**
**European Patent Office**
**Office européen des brevets**

(11) **EP 4 679 201 A1**

(12) # EUROPEAN PATENT APPLICATION
published in accordance with Art. 153(4) EPC

(43) Date of publication:
**14.01.2026   Bulletin 2026/03**

(21) Application number: **24766708.2**

(22) Date of filing: **26.01.2024**

(51) International Patent Classification (IPC):
**G05B 13/04** *(2006.01)*       **B25J 9/10** *(2006.01)*
**B25J 13/00** *(2006.01)*

(52) Cooperative Patent Classification (CPC):
**B25J 9/10; B25J 13/00; G05B 13/04**

(86) International application number:
**PCT/JP2024/002386**

(87) International publication number:
**WO 2024/185333 (12.09.2024 Gazette 2024/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:   **08.03.2023   JP 2023035824**

(71) Applicant: **Panasonic Intellectual Property
Management Co., Ltd.
Kadoma-shi, Osaka 571-0057 (JP)**

(72) Inventors:
• **KANO, Junichi
  Kadoma-shi, Osaka 571-0057 (JP)**
• **NAKAZAWA, Satoshi
  Kadoma-shi, Osaka 571-0057 (JP)**

(74) Representative: **Novagraaf International SA
Chemin de l'Echo 3
1213 Onex, Geneva (CH)**

(54)   **CONTROL SYSTEM, CONTROL METHOD, AND PROGRAM**

(57)     Disclosed herein is a technique for improving the motion control of a control target. A control system (1) performs motion control on a control target (such as a robot Rb1) from a starting point (S1) through a goal point (S2). The control system (1) includes a first path generator (11), a second path generator (12), and a control unit (13). The first path generator (11) outputs, using first model predictive control, first path data about a first target path (G1) for the control target with respect to a global path (A1) leading from the starting point (S1) to the goal point (S2). The first target path (G1) includes at least one passage point (P1). The second path generator (12) outputs, using second model predictive control, second path data based on the first path data. The second path data is data about a second target path (G2) for the control target with respect to each of a plurality of local sections (B1) defined by dividing the global path (A1) with respect to the at least one passage point (P1). The control unit (13) determines a manipulative variable with respect to the control target based on the second path data.

FIG. 1

EP 4 679 201 A1

**Description**

**Technical Field**

The present disclosure generally relates to a control system, a control method, and a program. More particularly, the present disclosure relates to a control system having a model predictive control function, a control method, and a program.

**Background Art**

Patent Literature 1 discloses a motion planning method which is designed to avoid collision of a manipulator from a starting point through a goal point. The motion planning method includes three processing steps, of which a first processing step and a second processing step are processing steps concerning planning. A third processing step includes actually controlling a robot. The first processing step is a motion plan which may be repeated by a global planner. The second process step is a continuous motion plan to be performed by a local planner. The third processing step includes performing a plan based on a first plan and a second plan by controlling driving of the robot. A global motion plan drawn up by the global planner is based on a drive road map (DRM). The local planner is based on a model predictive control.

**Citation List**

**Patent Literature**

Patent Literature 1: JP 2020-40205 A

**Summary of Invention**

According to the motion planning method described in Patent Literature 1, an appropriate motion plan (target path) for a control target such as a robot may still not be obtained. Therefore, there is still room for improvement regarding the motion control of the control target.

In view of the foregoing background, it is therefore an object of the present disclosure to provide a control system, a control method, and a program, all of which contribute to improving the motion control of a control target.

A control system according to an aspect of the present disclosure performs motion control on a control target from a starting point through a goal point. The control system includes a first path generator, a second path generator, and a control unit. The first path generator outputs, using first model predictive control, first path data about a first target path for the control target with respect to a global path leading from the starting point to the goal point. The first target path includes at least one passage point. The second path generator outputs, using second model predictive control, second path data based on the first path data. The second path data is data about a second target path for the control target with respect to each of a plurality of local sections defined by dividing the global path with respect to the at least one passage point. The control unit determines a manipulative variable with respect to the control target based on the second path data.

A control method according to another aspect of the present disclosure is a method for controlling a control system that performs motion control on a control target from a starting point through a goal point. The control method includes a first path generating step, a second path generating step, and a control step. The first path generating step includes outputting, using first model predictive control, first path data about a first target path for the control target with respect to a global path leading from the starting point to the goal point. The first target path includes at least one passage point. The second path generating step includes outputting, using second model predictive control, second path data based on the first path data. The second path data is data about a second target path for the control target with respect to each of a plurality of local sections defined by dividing the global path with respect to the at least one passage point. The control step includes determining a manipulative variable with respect to the control target based on the second path data.

A program according to still another aspect of the present disclosure is designed to cause one or more processors to perform the control method described above.

The present disclosure achieves the advantage of contributing to improving motion control of a control target.

**Brief Description of Drawings**

[FIG. 1] FIG. 1 is a block diagram illustrating a configuration for a control system according to an exemplary embodiment;

[FIG. 2] FIG. 2 is a conceptual diagram illustrating a control target (robot) to which the control system is applied;

[FIG. 3] FIG. 3 is a graph for use to describe what a prediction horizon is in the control system;

[FIG. 4A] FIG. 4A is a conceptual diagram illustrating a target path for the control system;

[FIG. 4B] FIG. 4B is a conceptual diagram illustrating another target path for the control system;

[FIG. 4C] FIG. 4C is a conceptual diagram illustrating still another target path for the control system;

[FIG. 5] FIG. 5 is a flowchart showing how the control system operates to perform a global path plan; and

[FIG. 6] FIG. 6 is a flowchart showing how the control system operates to perform a local path plan.

**Description of Embodiments**

(Overview)

A control system, control method, and program according to an exemplary embodiment and its variations will now be described with reference to the accompanying drawings. Note that the embodiment and its variations to be described below are only an exemplary one of various embodiments of the present disclosure and its variations and should not be construed as limiting. Rather, the exemplary embodiment and its variations may be readily modified in various manners depending on a design choice or any other factor without departing from the scope of the present disclosure. Optionally, the configuration according to any of the variations that will be described later may be adopted as appropriate in combination with the configuration of the exemplary embodiment or any other variation(s).

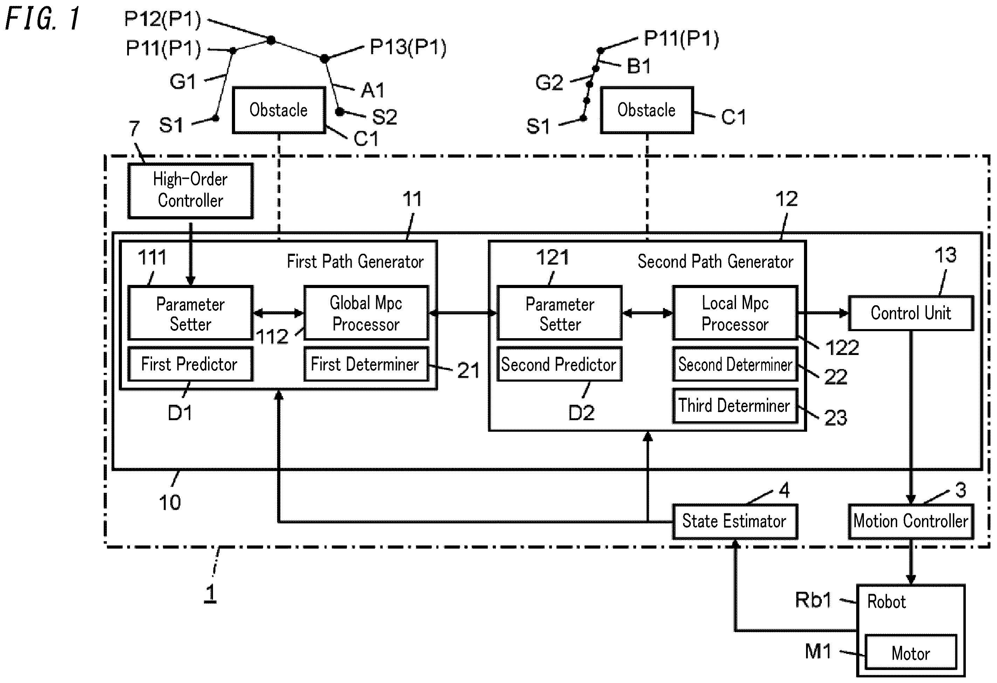

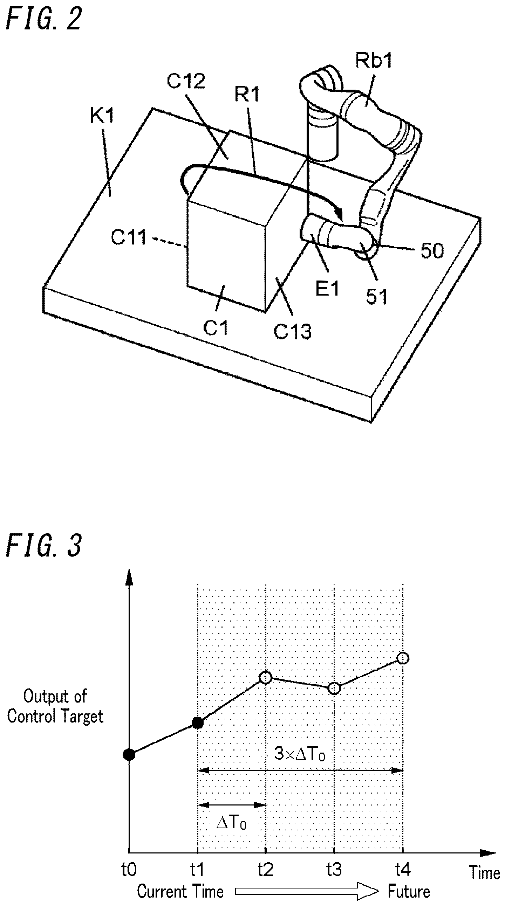

FIG. 1 is a block diagram illustrating a configuration for a control system 1 according to an exemplary embodiment. FIG. 2 is a conceptual diagram illustrating a robot Rb1 as an exemplary control target to which the control system 1 is applied. A control system 1 (refer to FIG. 1) according to an aspect is a system that uses the function of model predictive control (hereinafter abbreviated as "MPC") for doing optimization while predicting a future response at each point in time.

The control system 1 is configured to perform, using the result of prediction by the MPC, motion control on a robot Rb1 (refer to FIGS. 1 and 2), which is an exemplary control target. The MPC solves an optimization problem in every control cycle based on the model of the control target (robot Rb1) and the control system 1 performs feedback control on the control target (robot Rb1) based on the result. That is to say, the control system 1 gives control input to the control target (robot Rb1) using the result of prediction by the MPC.

Note that the control target (plant) according to the present disclosure is not limited to a robot Rb1 but may also be a control target of a different drive system. For example, the control target may also be a piece of equipment such as a carrier, an automobile, an airplane, or a drone.

In this embodiment, the control system 1 performs motion control on the control target (such as a robot Rb1) from a starting point S1 through a goal point S2 as shown in FIG. 1. Particularly, the control system 1 generates a target path (path plan) leading from the starting point S1 to the goal point S2 and controls the posture, position, and other parameters of the control target (robot Rb1) following the path plan.

The robot Rb1 may be any type of robot without limitation. For example, the robot Rb1 may be an articulated robot. In particular, the robot Rb1 is herein supposed to be a vertically articulated robot in the shape of an arm as shown in FIG. 2. The vertically articulated robot (robot Rb1) is herein supposed to be a work robot (industrial robot) for performing a predetermined type of tasks on a given workpiece in a facility such as a factory. However, the robot Rb1 is not limited to an industrial robot. The tasks may be, for example, the task of assembling a workpiece, the task of packaging a workpiece, or the task of doing surface treatment (such as polishing) on a workpiece. The vertically articulated robot (robot Rb1) holds an end effector E1 for polishing at an arm tip portion 51 (refer to FIG. 2) thereof and performs the tasks via the end effector E1.

The control system 1 includes a first path generator 11, a second path generator 12, and a control unit 13 as shown in FIG. 1.

The first path generator 11 outputs, using first model predictive control, first path data about a first target path G1 (refer to FIG. 1) for the control target with respect to a global path A1 (refer to FIG. 1) leading from the starting point S1 to the goal point S2. The first target path G1 includes at least one passage point P1 (refer to FIG. 1). The second path generator 12 outputs, using second model predictive control, second path data based on the first path data. The second path data is data about a second target path G2 (refer to FIG. 1) for the control target with respect to each of a plurality of local sections B1 (refer to FIG. 1) defined by dividing the global path A1 with respect to the at least one passage point P1. The control unit 13 determines a manipulative variable with respect to the control target based on the second path data.

In this control system 1, the second path data is output on a local section B1 basis using the second model predictive control based on the first path data including the passage point P1 obtained by using the first model predictive control. Consequently, this control system 1 achieves the advantage of contributing to improving the motion control of the control target.

A control method according to another aspect is a method for controlling a control system 1 that performs motion control on a control target from a starting point S1 through a goal point S2. The control method includes a first path generating step, a second path generating step, and a control step. The first path generating step includes outputting, using first model predictive control, first path data about a first target path G1 for the control target with respect to a global path A1 leading from the starting point S1 to the goal point S2. The first target path G1 includes at least one passage point P1. The second path generating step includes outputting, using second model predictive control, second path data based on the first path data. The second path data is data about a second target path G2 for the control target with respect to each of a plurality of local sections B1 defined by dividing the global path A1 with respect to the at least one passage point P1. The control step includes determining a manipulative variable with respect to the control target based on the second path data. This control method achieves the advantage of contributing to improving motion control of a control target.

This control method is used on a computer system (i.e., the control system 1). That is to say, this control method may also be implemented as a computer program. A program according to still another aspect is designed to cause one or more processors to perform the control method described above. Optionally, the program may be stored on a non-transitory storage medium which is readable for a computer.

(Details)

(1) Overall configuration

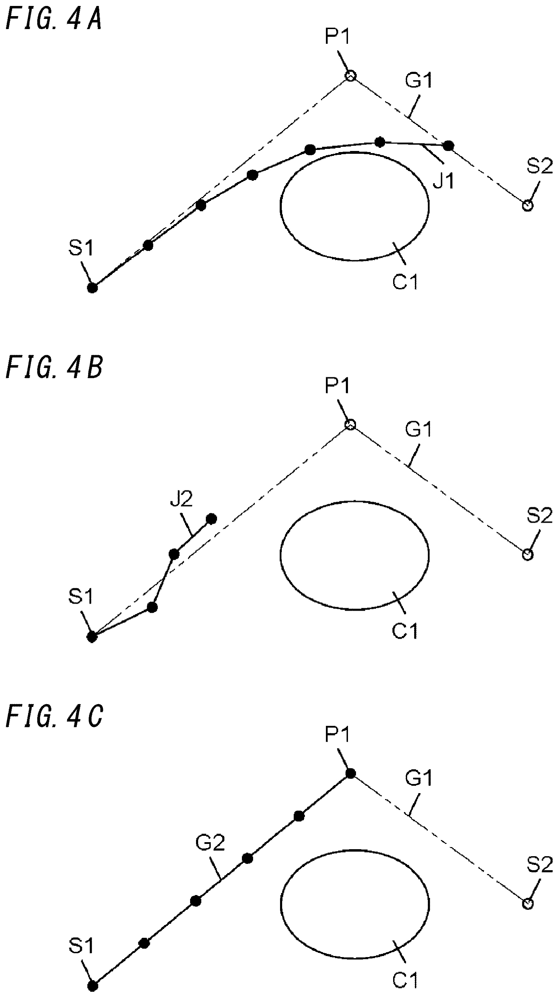

An overall system, including a control system 1 according to this embodiment and its peripheral constituent elements, will now be described in detail with reference to FIGS. 1-4C. In the following description, the control system 1 will be described on the supposition that the control target is a robot Rb1. FIG. 3 is a graph for use to describe what a prediction horizon is in the control system 1. FIGS. 4A-4C are conceptual diagrams illustrating target paths for the control system 1.

As described above, the control system 1 performs motion control on, for example, the robot Rb1, which is an industrial robot for performing a predetermined type of tasks on a workpiece, from a starting point S1 through a goal point S2.

The robot Rb1 is a so-called "manipulator" which has a structure similar to that of a human arm and may be, for example, a vertically articulated robot in the shape of an arm. The number of axes of the robot Rb1 is not limited to any particular number. The robot Rb1 may have the degree of freedom of six or seven axes, for example. The robot Rb1 includes: a plurality of movable parts 50 (refer to FIG. 2) including the arm tip portion 51; a single or a plurality of motors M1 (refer to FIG. 1; such as a servo motor) for turning the plurality of movable parts 50 by a specified angle; and a speed reducer mechanism.

The end effector E1 (refer to FIG. 2) may be attached to the arm tip portion 51 of the robot Rb1. The arm tip portion 51 of the robot Rb1 may touch or hold a workpiece via the end effector E1. The control system 1 is electrically connected to the control target (e.g., the robot Rb1 in this example) and configured to give control input to the control target (robot Rb1). In this embodiment, the control target for the control system 1 is supposed to be the single or plurality of motors M1 of the robot Rb1.

The control system 1 acquires control output from the robot Rb1 as a control target. The robot Rb1 is provided with, for example, an encoder for measuring the position, speed, and other parameters of the motor M1 and a force sensor for measuring the contact force of the robot Rb1. The control system 1 acquires, from the robot Rb1, data about the position of the motor M1, speed of the motor M1, contact force, and other parameters as controlled variables. Note that the controlled variables may include disturbance caused to the robot Rb1. Examples of the disturbances include a disturbance involved with the vibration caused by the motion of the robot Rb1.

Examples of the routes leading from the starting point S1 to the goal point S2 for the robot Rb1 include a route R1 (refer to FIG. 2) that bypasses either an obstacle C1 or a specific space. In the following description, the route R1 is supposed to be a route that bypasses the obstacle C1. Alternatively, the route R1 may also be a route that bypasses a specific space where there are no substances (obstacles C1).

In the example illustrated in FIG. 2, an object (obstacle C1) in a rectangular parallelepiped box shape is mounted on a workbench K1. When the robot Rb1 performs a packaging task, the obstacle C1 may be, for example, a carton for use to package the workpiece. Alternatively, the obstacle C1 may also be the workpiece itself.

FIG. 2 illustrates how motion control has been performed on the robot Rb1 to cause the end effector E1 to move along a route R1 leading from a left side surface C11 (as the starting point S1) of the obstacle C1 to a right side surface C13 (as the goal point S2) of the obstacle C1 over an upper surface C12 of the obstacle C1. The route R1 may be, for example, a curved route.

The control system 1 includes a computer system including one or more processors and a memory. At least some functions of the control system 1 are performed by making the processor of the computer system execute a program stored in the memory of the computer system. The program may be stored in advance in the memory. Alternatively, the program may also be downloaded via a telecommunications line such as the Internet or distributed after having been stored in a non-transitory storage medium such as a memory card.

As shown in FIG. 1, the control system 1 includes a model predictive controller 10, a motion controller 3, a state estimator 4, and a high-order controller 7. In other words, the control system 1 performs the respective functions of the model predictive controller 10, the motion controller 3, the state estimator 4, and the high-order controller 7. These functions of the control system 1 may be either housed in a single housing or distributed in multiple housings, whichever is appropriate. Note that the high-order controller 7 does not have to be one of constituent elements of the control system 1.

The state estimator 4 is electrically connected to an encoder, a force sensor, and other components, provided for the robot Rb1, to receive a signal including data about a controlled variable. The state estimator 4 estimates the state of the robot Rb1 based on the controlled variable and outputs the result of estimation to the model predictive controller 10. For example, the state estimator 4 estimates, based on the controlled variable, the position of the robot Rb1 (specifically, the position of the arm tip portion 51 or the end effector E1) and the angles formed by the respective articulated joints of the robot Rb1. That is to say, the "data about the controlled variable output by the robot Rb1" is data about, for example, the position of the robot Rb1 and the angles formed by the respective articulated joints. However, this is only an example and should not be construed as limiting. Alternatively, the "data about the controlled variable output by the robot Rb1" may also be data itself about the controlled variable such as the position of the motor M1, speed of the motor M1, contact force, or any other parameter.

The model predictive controller 10 has the MPC function. The model predictive controller 10 includes a storage unit. The storage unit includes an electrically programmable nonvolatile semiconductor memory such as a flash memory. The storage unit stores a predictive model (predictor) about the robot Rb1. As the predictive model, a transfer function model or a state space model, for example, may be used.

As the MPC, the Receding Horizon control (RH control) is performed in which a control output profile of a predetermined amount of time from the current time to a certain point in time in the future is optimized, thereby using only an initial value of the profile as a control input profile. The RH control is a control technique for optimizing, at each point in time, the response until a future point in time later than the current time by a finite amount of time. According to the RH control, an estimated time length of the output profile is used as a prediction horizon and an estimated length of the input profile is used as a control horizon. The control horizon is basically shorter than the prediction horizon.

The model predictive controller 10 according to this embodiment performs control such that data based on the controlled variable output by the robot Rb1 matches a command value (target value) provided by the high-order controller 7. The command value (target value) includes data designating the goal point S2. The model predictive controller 10 defines, using the state space model of the robot Rb1, for example, a state variable with the position of the end effector E1 and the respective angles formed by the articulated joints of the robot Rb1 provided by the state estimator 4 regarded as state quantities and calculates such a manipulative variable that optimizes (e.g., minimizes) the deviations of the position and angles (i.e., the differences from the respective target values).

FIG. 3 is a graph showing an exemplary prediction horizon. In FIG. 3, the abscissa indicates the time, and the ordinate indicates the output of the control target (e.g., an articular angle formed by one articulated joint of the robot Rb1). In FIG. 3, the solid circles at a time t0 and a time t1 (current time) are the actual values of the articular angles and the open circles at times t2, t3, and t4 are predicted values. In FIG. 3, $\Delta T0$ designates a sampling cycle (sampling time) with respect to the data about the articular angles. In the example shown in FIG. 3, the prediction horizon = 3 (steps) and the prediction section (prediction time length) is $3 \times \Delta T0$. That is to say, the model predictive controller 10 predicts articular angles corresponding to the prediction horizon (e.g., "3" in FIG. 3) from the current time t1 with respect to actual value data (e.g., articular angles in FIG. 3) based on the controlled variable provided by the robot Rb1.

The model predictive controller 10 according to this embodiment sets such a prediction horizon on an individual basis for a global path plan corresponding to the global path A1 and a local path plan corresponding to the local sections B1 as will be described later.

The model predictive controller 10 includes a first path generator 11, a second path generator 12, and a control unit 13 as shown in FIG. 1.

The first path generator 11 acquires, in a first sampling cycle, for example, data based on the controlled variable output by the robot Rb1 with respect to the global path A1 (e.g., data about the position and articular angles of the robot Rb1 in this example). In addition, the first path generator 11 also acquires a command value (target value) provided by the high-order controller 7. The first path generator 11 outputs, using the first model predictive control, first path data to the second path generator 12 based on the command value and data based on the controlled variable output by the robot Rb1. The first path data is data about the first target path G1, including at least one passage point P1 (way point: there are three passage points P1 in FIG. 1), of the robot Rb1 with respect to the global path A1 leading from the starting point S1 to the goal point S2.

Specifically, the first path generator 11 includes a parameter setter 111, a global MPC processor 112, a first predictor D1, and a first determiner 21 as shown in FIG. 1.

The parameter setter 111 sets parameters for generating the first target path G1. The parameter setter 111 sets (determines), as one of the parameters, the horizon length of a first prediction horizon corresponding to the first model predictive control (hereinafter referred to as a "first parameter").

In this embodiment, if the first parameter is P1, the parameter setter 111 sets the first parameter to satisfy the following conditional expression (1):

$$P1 \geq X1/(\Delta T1 \times Z1) \qquad (1)$$

In this conditional expression (1), X1 is the distance specified by command value data acquired from the high-order controller 7 and indicates a distance (which may be the shortest distance) from the starting point S1 to the goal point S2 to bypass the obstacle C1, i.e., a distance of the global path A1. X1 does not have to be such a distance specified by the command value data acquired from the high-order controller 7 but may also be a distance calculated by the first path generator 11, for example. In this conditional expression (1), $\Delta T1$ indicates a first sampling cycle and Z1 is quantity about a constraint on the robot Rb1 (control target) and may be, for example, a maximum speed of the robot Rb1 on the move. The first sampling cycle is longer than a second sampling cycle (to be described later). In other words, the first path generator 11 is supposed to acquire, more coarsely than the second path generator 12, the data based on the controlled variable output by the robot Rb1.

For example, at the time of initialization, the parameter setter 111 sets, as a first parameter, a minimum value (which is an integer) that satisfies the conditional expression (1).

The first predictor D1 includes a prediction model such as a transfer function model or a state space model to be applied to the first model predictive control.

The global MPC processor 112 generates a first target path G1 based on a first prediction horizon corresponding to the first model predictive control. The global MPC processor 112 generates, using the first predictor D1, the first target path G1 (global path plan) based on the first prediction horizon that has been set by the parameter setter 111. The global MPC processor 112 generates the first target path G1 as three-dimensional coordinate data based on, for example, computer aided design (CAD) data or computer aided manufacturing (CAM) data about the robot Rb1. At that time, the global MPC processor 112 generates a first target path G1 including at least one passage point P1 (e.g., three passage points P11-P13 in FIG. 1) for the global path A1 leading from the starting point S1 to the goal point S2. The global MPC processor 112 determines, on the global path A1, the number and position(s) of a single or a plurality of passage points P1 based on, for example, a constraint such as speed on the robot Rb1 and a cost function. The distance to the next passage point P1 may be, for example, a distance reachable by one sampling (i.e., in a first sampling cycle).

That is to say, the first path generator 11 determines a first prediction horizon corresponding to the first model predictive control to cause the first prediction horizon to have a horizon length equal to or longer than a horizon length based on a distance of the global path A1, a first sampling cycle of data based on a controlled variable output by the robot Rb1 with respect to the global path A1, and a constraint on the robot Rb1 (control target). The first path generator 11 generates the first target path G1 based on the first prediction horizon.

The first determiner 21 determines whether the first target path G1 (global path plan) generated based on the first prediction horizon thus determined is reachable to the goal point S2.

The first path generator 11 repeatedly determines the first prediction horizon and generates the first target path G1 a number of times until the first determiner 21 determines that the first target path G1 be reachable to the goal point S2.

For example, until the first determiner 21 determines that the first target path G1 be reachable to the goal point S2, the first path generator 11 repeatedly adjusts the first prediction horizon (e.g., increases the first prediction horizon one by one from the "minimum value" at the time of initialization) while satisfying the conditional expression (1) described above. When determining that the first target path G1 be reachable to the goal point S2, the first path generator 11 outputs the first path data to the second path generator 12 to end the processing.

The second path generator 12 acquires the first path data from the first path generator 11. The second path generator 12 acquires, in a second sampling cycle, for example, data based on the controlled variable output by the robot Rb1 with respect to each of a plurality of local sections B1 defined by dividing the global path A1. The second path generator 12 outputs, using the second model predictive control, second path data based on the first path data to the control unit 13. The second path data is data about the second target path G2 of the robot Rb1 with respect to each of a plurality of local sections B1 (e.g., four sections in FIG. 1) defined by dividing the global path A1 with respect to at least one passage point P1 (e.g., three passage points in FIG. 1).

Specifically, the second path generator 12 includes a parameter setter 121, a local MPC processor 122, a second predictor D2, a second determiner 22, and a third determiner 23 as shown in FIG. 1.

The parameter setter 121 sets parameters for generating the second target path G2 with respect to each of the local sections B1. The parameter setter 121 sets (determines), as one of the parameters, the horizon length of a second prediction horizon corresponding to the second model predictive control (hereinafter referred to as a "second parameter").

In this embodiment, if the second parameter is P2, the parameter setter 121 sets the second parameter to satisfy the following conditional expression (2):

$$P2 \geq X2/(\Delta T2 \times Z1) \qquad (2)$$

In this conditional expression (2), X2 indicates the shortest distance to the next passage point P1 (which is the distance to the goal point S2 for the last time), i.e., the distance of the corresponding local section B1. In this conditional expression (2), $\Delta T2$ indicates a second sampling cycle and Z1 is quantity about a constraint on the robot Rb1 (control target) and may be, for example, a maximum speed of the robot Rb1 on the move as in the conditional expression (1). The second sampling cycle is shorter than a first sampling cycle. The second sampling cycle corresponds to a resolution concerning the actual motion control of the robot Rb1.

For example, at the time of initialization, the parameter setter 121 sets, as a second parameter, a minimum value (which is an integer) that satisfies the conditional expression (2) with respect to each local section B1.

The second predictor D2 includes a prediction model such as a transfer function model or a state space model applied to the second model predictive control. In this embodiment, the first predictor D1 is different from the second predictor D2. For example, the second predictor D2 is a predictor which may predict the second target path G2 with a disturbance concerning vibration to be included in a controlled variable output by the robot Rb1 taken into account. The second predictor D2 predicts the second target path G2 with offset correction made with respect to the vibration (disturbance). The control system 1 may include a disturbance observer for estimating a disturbance such as vibration which may be included in the controlled variable. The second path generator 12 may acquire the result of estimation from the disturbance observer.

The local MPC processor 122 generates a second target path G2 based on a second prediction horizon corresponding to the second model predictive control. The local MPC processor 122 generates, using the second predictor D2, the second target path G2 (local path plan) based on the second prediction horizon that has been set by the parameter setter 121. The local MPC processor 122 generates the second target path G2 as three-dimensional coordinate data based on, for example, CAD data or CAM data about the robot Rb1.

Suppose the number of the passage points P1 is N. The local MPC processor 122 repeatedly generates the second target path G2 with respect to a local section B1 leading from the starting point S1 to a first passage point P11, ..., a local section B1 leading from an $n^{th}$ passage point P1 (where n = 1 to N -1) to a $k^{th}$ passage point P1 (where k = n + 1), ..., and a local section B1 leading from an $N^{th}$ passage point to the goal point S2, thereby outputting the second path data.

That is to say, the second path generator 12 determines a second prediction horizon corresponding to the second model predictive control to cause the second prediction horizon to have a horizon length equal to or longer than a horizon length based on a distance of a corresponding local section B1 belonging to the plurality of local sections B1, a second sampling cycle of data based on a controlled variable output by the robot Rb1 with respect to the corresponding local section B1, and a constraint on the control target (e.g., the robot Rb1 in this example). The second path generator 12 generates the second target path G2 based on the second prediction horizon.

The second determiner 22 determines whether the second target path G2 generated based on the second prediction horizon thus determined is reachable to the end point of the corresponding local section B1.

The second path generator 12 repeatedly determines the second prediction horizon and generates the second target path G2 a number of times until the second determiner 22 determines that the second target path G2 be reachable to the end point (of the corresponding local section B1).

For example, until the second determiner 22 determines that the second target path G2 be reachable to the end point of the target local section B1, the second path generator 12 repeatedly adjusts the second prediction horizon (e.g., increases the second prediction horizon one by one from the "minimum value" at the time of initialization) while satisfying the conditional expression (2) described above. When determining that the second target path G2 be reachable to the end point of the target local section B1, the second path generator 12 ends the processing about the local section B1.

The timing to output the second path data to the control unit 13 is not limited to any particular timing. The second path generator 12 may output the second path data irrespective of the decision made by the second determiner 22, every time the second target path G2 is generated. Alternatively, the second path generator 12 may output the second path data when it is determined that the second target path G2 be reachable to the end point of the target local section B1.

The third determiner 23 determines, when the second determiner 22 has determined that the second target path G2 be reachable to the end point (of the corresponding local section B1), whether the second target path G2 (corresponding to the last local section B1 out of the plurality of local sections B1) is reachable to the goal point S2.

The second path generator 12 repeatedly determines the second prediction horizon and generates the second target path G2 a number of times until the third determiner 23 determines that the second target path G2 be reachable to the goal point S2.

That is to say, the second path generator 12 repeatedly generates the second target path G2 and outputs the second path data to the control unit 13 a number of times until it is determined that the second target path G2 be reachable to the goal point S2 when the target local section B1 is the last local section B1. When it is determined that the second target path G2 be reachable to the goal point S2, the second path generator 12 finishes outputting the second path data.

Note that in this embodiment, a first prediction time length (prediction section) based on the first prediction horizon and the first sampling cycle is longer than a second prediction time length (prediction section) based on the second prediction horizon and the second sampling cycle.

The second path generator 12 is supposed to perform the processing including generating each second target path G2 and outputting each second path data in real time when the robot Rb1 is activated in practice to perform its assigned task. On the other hand, the first path generator 11 is supposed to perform the processing including generating the first target path G1 and outputting the first path data not in real time when the robot Rb1 is actually activated but by making the robot Rb1 have a test run in advance from the starting point S1 to the goal point S2.

Alternatively, the first path generator 11 may also perform the processing in real time when the robot Rb1 is activated in practice to perform its assigned task. In that case, the first path generator 11 may acquire the second path data in real time from the second path generator 12, update the first target path G1 for the current time in real time with the second target path G2 of the second path data taken into account, and output the first path data.

The control unit 13 determines, based on the second path data, a manipulative variable with respect to the robot Rb1 (hereinafter referred to as a "first manipulative variable"). The control unit 13 sets, based on the second path data, the respective positions and articular angle values of the robot Rb1 for the first several steps of the second prediction horizon (i.e., control horizon) from the current time. The control unit 13 may determine, for example, the first manipulative variable as a variation required to cause the position and articular angles of the robot Rb1 to match the position and articular angles of the robot Rb1 according to the second path data.

The control unit 13 calculates the first manipulative variable based on, for example, data on a second sampling period basis. The control unit 13 is electrically connected to the motion controller 3 and outputs a control signal (such as a digital signal) including the first manipulative variable to the motion controller 3. The first manipulative variable is not limited to the variation required with respect to the position and articular angles of the robot Rb1. Rather, the first manipulative variable may be a variation required with respect to at least one parameter selected from the group consisting of the position, articular angles, posture, speed, acceleration, contact force, and torque of the robot Rb1.

The high-order controller 7 is implemented as, for example, a programmable logic controller (PLC). The high-order controller 7 is communicatively connected to a servo driver including the model predictive controller 10. The servo driver may be implemented as, for example, a single apparatus including the model predictive controller 10, the motion controller 3, and the state estimator 4. The servo driver performs drive control on a single or a plurality of motors M1 (control targets) for driving the plurality of movable parts 50 of the robot Rb1.

The high-order controller 7 generates a command signal including an operating command (command value data) about a predetermined task process step and transmits the command signal to the servo driver including the model predictive controller 10 to control the servo driver. The operating command (command value data) may include target values about the position, articular angles, posture, speed, acceleration, contact force, and torque of the robot Rb1 described above.

In this embodiment, the operating command from the high-order controller 7 may be provided to, for example, the parameter setter 111 of the first path generator 11 of the model predictive controller 10.

The motion controller 3 controls the motion of the robot Rb1 in accordance with the manipulative variable (first manipulative variable) provided by the control unit 13. Specifically, the motion controller 3 determines a second manipulative variable based on the first manipulative variable provided by the control unit 13 and enters the second manipulative variable into the robot Rb1 (i.e., enters control input). The second manipulative variable may be, for example, the torque (value) of the motor M1 or the current value of a drive current to be supplied to the motor M1. The motion controller 3 may include, for example, an inverter circuit for supplying electric power to the motor M1. The motion controller 3 determines, based on the first manipulative variable such as the position, articular angles, posture, speed, acceleration, contact force, or torque of the robot Rb1, the current value of the drive current to be supplied to the motor M1 (i.e., the second manipulative variable) and controls the inverter circuit to adjust the drive current to be supplied to the motor M1.

(2) Operation of control system

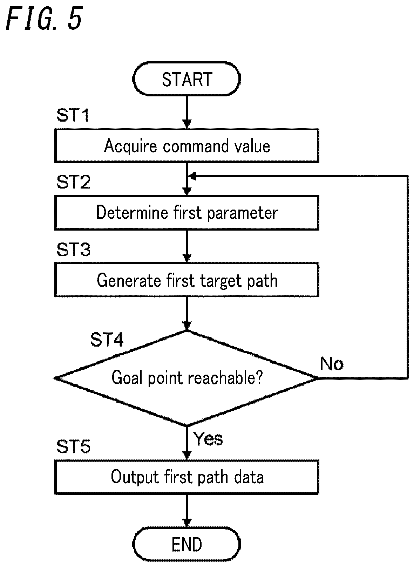

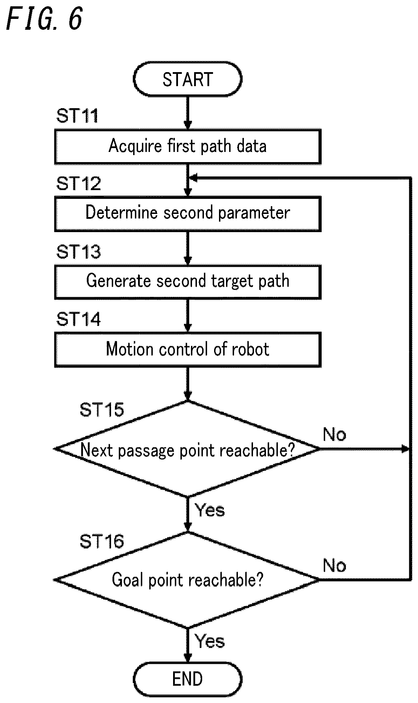

Next, a series of processing flows about the operation of the control system 1 will be described with reference to FIGS. 5 and 6. FIG. 5 is a flowchart showing how the control system 1 operates to perform a global path plan. FIG. 6 is a flowchart showing how the control system 1 operates to perform a local path plan. Note that the flowchart shown in each of FIGS. 5 and 6 is only an exemplary procedure of operation of the control system 1 and should not be construed as limiting. Optionally, the processing steps shown in FIGS. 5 and 6 may be performed in a different order from the illustrated one, some of the processing steps shown in FIGS. 5 and 6 may be omitted as appropriate, and/or an additional processing step may be performed as needed.

[Global path plan]

First, it will be described with reference to FIG. 5 how the control system 1 operates when performing a global path plan.

The first path generator 11 acquires command value data from the high-order controller 7 (in Step ST1) to determine a global path A1 leading from the starting point S1 to the goal point S2.

The first path generator 11 sets (determines) a first parameter (e.g., a "minimum value" that satisfies the conditional expression (1)) that is the horizon length of a first prediction horizon to satisfy the conditional expression (1) (in Step ST2).

The first path generator 11 generates a first target path G1 (global path plan) based on the first prediction horizon (in Step ST3).

At this point, the first path generator 11 determines whether the first target path G1 (global path plan) generated based on the first prediction horizon is reachable to the goal point S2 (in Step ST4). If the first path generator 11 determines that the first target path G1 be reachable to the goal point S2 (if the answer is YES in Step ST4), the first path generator 11 outputs first path data to the second path generator 12 (in Step ST5: first path generating step) to end a series of processing steps of generating the first target path G1.

On the other hand, if the first path generator 11 determines that the first target path G1 not be reachable to the goal point S2 (if the answer is NO in Step ST4), then the first path generator 11 returns to Step ST2 to re-set the first parameter while satisfying the conditional expression (1). The first path generator 11 may set a first parameter by, for example, adding one to the "minimum value" for the first time. From this time and on, the first path generator 11 will make adjustment by increasing the first parameter one by one until the first target path G1 is reachable to the goal point S2, for example.

[Local path plan]

Next, it will be described with reference to FIG. 6 how the control system 1 operates when performing a local path plan.

The second path generator 12 acquires first path data from the first path generator 11 (in Step ST11) to determine a target local section B1 for the current time.

The second path generator 12 sets (determines) a second parameter (e.g., a "minimum value" that satisfies the conditional expression (2)) that is the horizon length of a second prediction horizon to satisfy the conditional expression (2) (in Step ST12).

The second path generator 12 generates a second target path G2 (local path plan) based on the second prediction horizon (in Step ST13) and outputs the second path data to the control unit 13 (corresponding to the second path generating step). As a result, the control unit 13 determines, based on the second path data, a manipulative variable for the robot Rb1 (corresponding to the control step) to perform motion control on the robot Rb1 in real time, for example (in Step ST14).

At this point, the second path generator 12 determines whether the second target path G2 (local path plan) generated based on the second prediction horizon is reachable to the end point of the corresponding local section B1 (i.e., to the next passage point P1) (in Step ST15).

If the second path generator 12 determines that the second target path G2 be reachable to the next passage point P1 (if the answer is YES in Step ST15), the second path generator 12 proceeds to the next processing step ST16. On the other hand, if the second path generator 12 determines that the second target path G2 not be reachable to the next passage point P1 (if the answer is NO in Step ST15), then the second path generator 12 either returns to Step ST12 to re-set the second parameter while satisfying the conditional expression (2) or returns to Step ST13 (without re-setting the second parameter). The second path generator 12 may set a second parameter by, for example, adding one to the "minimum value" for the first time. From this time and on, the second path generator 12 will output the second path data to the control unit 13 while making adjustment by increasing the second parameter one by one until the second target path G2 is reachable to the next passage point P1, for example, thereby performing motion control on the robot Rb1 in real time.

Next, in Step ST16, the second path generator 12 determines whether the second target path G2 is reachable to the goal point S2.

When determining that the second target path G2 be reachable to the goal point S2 (if the answer is YES in Step ST16), then the second path generator 12 ends the series of processing steps of generating the second target path G2. On the other hand, when determining that the second target path G2 not be reachable to the goal point S2 (if the answer is NO in Step ST16), then second path generator 12 returns to Step ST12. Then, the second path generator 12 sets (determines), with respect to the next local section B1, a second parameter as the horizon length for the second prediction horizon to satisfy the conditional expression (2).

(3) Advantages

As can be seen from the foregoing description, the control system 1 according to this embodiment outputs second path data on a local section B1 basis using second model predictive control based on first path data including a passage point P1 obtained by using first model predictive control. Consequently, the control system 1 achieves the advantage of contributing to improving the motion control of the control target (such as a robot Rb1).

In addition, the control system 1 according to this embodiment sets a first prediction horizon corresponding to the first model predictive control to cause the first prediction horizon to have a horizon length equal to or longer than a horizon length based on a distance of the global path A1, a first sampling cycle, and a constraint on the control target (such as a robot Rb1). This may reduce the chances of the first prediction horizon coming to have too short a horizon length to avoid making the first target path G1 a redundant path, thus further improving the motion control of the control target (such as the robot Rb1).

Furthermore, the control system 1 according to this embodiment sets a second prediction horizon corresponding to the second model predictive control to cause the second prediction horizon to have a horizon length equal to or longer than a horizon length based on a distance of the corresponding local section B1, a second sampling cycle, and a constraint on the control target (such as a robot Rb1). This may reduce the chances of the second prediction horizon coming to have too short a horizon length to avoid making the second target path G2 a redundant path, thus further improving the motion control of the control target (such as the robot Rb1).

In particular, according to the continuous motion plan using the local planner as disclosed in Patent Literature 1 cited above, the prediction horizon may be too long or too short.

Specifically, the control system 1 according to this embodiment sets the second prediction horizon on a local section B1 basis when generating the local path plan. In contrast, according to the method of Patent Literature 1, the prediction horizon may become too long.

The problem resulting from the length of the prediction horizon will now be described with reference to FIGS. 4A-4C.

In FIG. 4A, a local path J1 in a situation where the prediction horizon has become too long is indicated by the solid curve. The solid circles on the local path J1 indicate prediction points (positions) on a sampling cycle basis.

In FIG. 4B, a local path J2 in a situation where the prediction horizon has become too short is indicated by the solid curve. The solid circles on the local path J2 indicate prediction points (positions) on a sampling cycle basis.

In FIG. 4C, the second target path G2 generated by the second path generator 12 of the control system 1 is indicated by the solid line. The solid circles on the second target path G2 indicate prediction points (positions) on a second sampling cycle basis.

Note that in FIGS. 4A-4C, an example of the first target path G1 including one passage point P1 and generated by the first path generator 11 of the control system 1 is indicated by the two-dot chain to facilitate the comparison.

If the prediction horizon has become too long, then the local path J1 may turn into such a path that passes closer to the obstacle C1 to reach the goal point S2 as soon as possible as shown in FIG. 4A. As a result, the function of detecting the obstacle C1 to avoid collision between the control target and the obstacle C1 and the processing of returning in case the control target collides against the obstacle C1 are needed. Consequently, too long a prediction horizon leads to an increase in the processing load of the overall system including the computational load of the MPC.

Also, if the prediction horizon has become too short, the local path J2 may become an unstable and redundant path as shown in FIG. 4B. Particularly when the control target is an articulated robot, the local path J2 may be a more redundant path due to the presence of multiple articulated joints.

On the other hand, as shown in FIG. 4C, the second target path G2 generated by the second path generator 12 of the control system 1 is reachable to the passage point P1 within the second prediction horizon, thus making it easier to generate the shortest path plan to the passage point P1. Consequently, the motion of the control target may be controlled with more stability.

(4) Variations

Next, variations of the exemplary embodiment will be enumerated one after another. Note that the variations to be described below may be adopted in combination as appropriate.

The functions of the control system 1 according to the exemplary embodiment may also be implemented as a control method, a computer program, or a non-transitory storage medium on which the computer program is stored.

The control system 1 according to the present disclosure includes a computer system. The computer system includes a processor and a memory as principal hardware components thereof. The computer system performs the functions of the control system 1 according to the present disclosure by making the processor execute a program stored in the memory of the computer system. The program may be stored in advance in the memory of the computer system. Alternatively, the program may also be downloaded through a telecommunications line or be distributed after having been recorded in some non-transitory storage medium such as a memory card, an optical disc, or a hard disk drive, any of which is readable for the computer system. The processor of the computer system may be made up of a single or a plurality of electronic circuits including a semiconductor integrated circuit (IC) or a large-scale integrated circuit (LSI). As used herein, the "integrated circuit" such as an IC or an LSI is called by a different name depending on the degree of integration thereof. Examples of the integrated circuits such as an IC or an LSI include integrated circuits called a "system LSI," a "very-large-scale integrated circuit (VLSI)," and an "ultra-large-scale integrated circuit (ULSI)." Optionally, a field-programmable gate array (FPGA) to be programmed after an LSI has been fabricated or a reconfigurable logic device allowing the connections or circuit sections inside of an LSI to be reconfigured may also be adopted as the processor. Those electronic circuits may be either integrated together on a single chip or distributed on multiple chips, whichever is appropriate. Those multiple chips may be aggregated together in a single device or distributed in multiple devices without limitation. As used herein, the "computer system" includes a microcontroller including one or more processors and one or more memories. Thus, the microcontroller may also be implemented as a single or a plurality of electronic circuits including a semiconductor integrated circuit or a large-scale integrated circuit.

In the exemplary embodiment described above, the multiple functions of the control system 1 are aggregated in a single housing. However, this is not an essential configuration for the control system 1. Alternatively, the respective constituent elements of the control system 1 may also be distributed in multiple housings.

Conversely, multiple functions of the control system 1 may be aggregated together in a single housing. Furthermore, at least some functions of the control system 1 (e.g., some functions of the control system 1) may be implemented as a cloud computing system.

In the embodiment described above, the first path generator 11 repeatedly adjusts the first prediction horizon while satisfying the conditional expression (1) until the first determiner 21 determines that the first target path G1 be reachable to the goal point S2. In the meantime, the first prediction horizon is increased one by one. Alternatively, any parameter of the conditional expression (1) may be changed. For example, the first sampling cycle may be changed and the first prediction horizon may be changed accordingly.

In the embodiment described above, the second path generator 12 repeatedly adjusts the second prediction horizon while satisfying the conditional expression (2) until the second determiner 22 determines that the second target path G2 be reachable to the end point of the local section B1. In the meantime, the second prediction horizon is increased one by one. Alternatively, any parameter of the conditional expression (2) may be changed. For example, the second sampling cycle may be changed and the second prediction horizon may be changed accordingly.

Optionally, the control system 1 may change the passage point P1, the first prediction horizon, the second prediction horizon, the conditional expression (1), and the conditional expression (2) in accordance with an operating command entered by the user. The control system 1 may include an operating member (user interface) that accepts the operating command.

(Recapitulation)

The exemplary embodiment and its variations described above are specific implementations of the following aspects of the present disclosure.

A control system (1) according to a first aspect performs motion control on a control target (such as a robot Rb1) from a starting point (S1) through a goal point (S2). The control system (1) includes a first path generator (11), a second path generator (12), and a control unit (13). The first path generator (11) outputs, using first model predictive control, first path data about a first target path (G1) for the control target with respect to a global path (A1) leading from the starting point (S1) to the goal point (S2). The first target path (G1) includes at least one passage point (P1). The second path generator (12) outputs, using second model predictive control, second path data based on the first path data. The second path data is data about a second target path (G2) for the control target with respect to each of a plurality of local sections (B1) defined by dividing the global path (A1) with respect to the at least one passage point (P1). The control unit (13) determines a manipulative variable with respect to the control target based on the second path data.

According to this aspect, second path data is output on a local section (B1) basis using second model predictive control based on first path data including a passage point (P1) obtained by using first model predictive control. Consequently, the control system (1) achieves the advantage of contributing to improving the motion control of the control target.

In a control system (1) according to a second aspect, which may be implemented in conjunction with the first aspect, the first path generator (11) determines a first prediction horizon corresponding to the first model predictive control to cause the first prediction horizon to have a horizon length equal to or longer than a horizon length based on a distance of the global path (A1), a first sampling cycle of data based on a controlled variable output by the control target with respect to the global path (A1), and a constraint on the control target. The first path generator (11) generates the first target path (G1) based on the first prediction horizon.

This aspect may reduce the chances of the first prediction horizon coming to have too short a horizon length to avoid making the first target path (G1) a redundant path, thus further improving the motion control of the control target.

In a control system (1) according to a third aspect, which may be implemented in conjunction with the second aspect, the first path generator (11) includes a first determiner (21) that determines whether the first target path (G1) generated based on the first prediction horizon thus determined is reachable to the goal point (S2). The first path generator (11) repeatedly determines the first prediction horizon and generates the first target path (G1) a number of times until the first determiner (21) determines that the first target path (G1) be reachable to the goal point (S2).

This aspect contributes to further improving the motion control of the control target.

In a control system (1) according to a fourth aspect, which may be implemented in conjunction with any one of the first to third aspects, the second path generator (12) determines a second prediction horizon corresponding to the second model predictive control to cause the second prediction horizon to have a horizon length equal to or longer than a horizon length based on a distance of a corresponding local section (B1) belonging to the plurality of local sections (B1), a second sampling cycle of data based on a controlled variable output by the control target with respect to the corresponding local section (B1), and a constraint on the control target. The second path generator (12) generates the second target path (G2) based on the second prediction horizon.

This aspect may reduce the chances of the second prediction horizon coming to have too short a horizon length to avoid making the second target path (G1) a redundant path, thus further improving the motion control of the control target.

In a control system (1) according to a fifth aspect, which may be implemented in conjunction with the fourth aspect, the second path generator (12) includes a second determiner (22) that determines whether the second target path (G2) generated based on the second prediction horizon thus determined is reachable to an end point of the corresponding local section (B1). The second path generator (12) repeatedly determines the second prediction horizon and generates the second target path (G2) a number of times until the second determiner (22) determines that the second target path (G2) be reachable to the end point.

This aspect contributes to further improving the motion control of the control target.

In a control system (1) according to a sixth aspect, which may be implemented in conjunction with the fifth aspect, the second path generator (12) further includes a third determiner (23) that determines, when the second determiner (22) has determined that the second target path (G2) be reachable to the end point, whether the second target path (G2) is reachable to the goal point (S2). The second path generator (12) repeatedly determines the second prediction horizon and generates the second target path (G2) a number of times until the third determiner (23) determines that the second target path (G2) be reachable to the goal point (S2).

This aspect contributes to further improving the motion control of the control target.

In a control system (1) according to a seventh aspect, which may be implemented in conjunction with any one of the first to sixth aspects, the first path generator (11) generates the first target path (G1) based on a first prediction horizon corresponding to the first model predictive control. The second path generator (12) generates the second target path (G2) based on a second prediction horizon corresponding to the second model predictive control. A first prediction time length is longer than a second prediction time length. The first prediction time length is based on not only the first prediction horizon but also a first sampling cycle of data based on a controlled variable output by the control target with respect to the global path (A1). The second prediction time length is based on not only the second prediction horizon but also a second sampling cycle of data based on the controlled variable output by the control target with respect to each of the plurality of local sections (B1).

This aspect contributes to further improving the motion control of the control target.

In a control system (1) according to an eighth aspect, which may be implemented in conjunction with any one of the first to seventh aspects, a first sampling cycle of data based on a controlled variable output by the control target with respect to the global path (A1) is longer than a second sampling cycle of data based on the controlled variable output by the control target with respect to each of the plurality of local sections (B1).

This aspect contributes to further improving the motion control of the control target.

In a control system (1) according to a ninth aspect, which may be implemented in conjunction with any one of the first to eighth aspects, a first predictor (D1) applied to the first model predictive control is different from a second predictor (D2) applied to the second model predictive control.

This aspect makes it easier to reduce the computational load with respect to the first model predictive control, and improve the prediction accuracy with respect to the second model predictive control, compared to a situation where the same predictor is used, for example. Consequently, this aspect contributes to further improving the motion control of the control target.

In a control system (1) according to a tenth aspect, which may be implemented in conjunction with the ninth aspect, the second predictor (D2) may predict the second target path (G2) with disturbance concerning vibration to be included in a controlled variable output by the control target taken into account.

This aspect makes it easier to improve the prediction accuracy with respect to the second model predictive control. Consequently, this aspect contributes to further improving the motion control of the control target.

In a control system (1) according to an eleventh aspect, which may be implemented in conjunction with any one of the first to tenth aspects, the control target is an articulated robot (robot Rb1).

This aspect contributes to improving the motion control of an articulated robot.

In a control system (1) according to a twelfth aspect, which may be implemented in conjunction with any one of the first to eleventh aspects, a route leading from the starting point (S1) to the goal point (S2) includes a route designed to bypass either an obstacle (C1) or a specific space.

This aspect contributes to improving the motion control of the control target with respect to a route that bypasses either an obstacle (C1) or a specific space.

A control method according to a thirteenth aspect is a method for controlling a control system (1) that performs motion control on a control target (such as a robot Rb1) from a starting point (S1) through a goal point (S2). The control method includes a first path generating step, a second path generating step, and a control step. The first path generating step includes outputting, using first model predictive control, first path data about a first target path (G1) for the control target with respect to a global path (A1) leading from the starting point (S1) to the goal point (S2). The first target path (G1) includes at least one passage point (P1). The second path generating step includes outputting, using second model predictive control, second path data based on the first path data. The second path data is data about a second target path (G2) for the control target with respect to each of a plurality of local sections (B1) defined by dividing the global path (A1) with respect to the at least one passage point (P1). The control step includes determining a manipulative variable with respect to the control target based on the second path data.

This aspect allows for providing a control method contributing to improving motion control of a control target.

A program according to a fourteenth aspect is designed to cause one or more processors to perform the control method according to the thirteenth aspect.

This aspect allows for providing a function contributing to improving motion control of a control target.

Note that the constituent elements according to the second to twelfth aspects are not essential constituent elements for the control system (1) but may be omitted as appropriate.

**Reference Signs List**

| | |
|---|---|
| 1 | Control System |
| 11 | First Path Generator |
| 12 | Second Path Generator |
| 13 | Control Unit |
| 21 | First Determiner |
| 22 | Second Determiner |
| 23 | Third Determiner |
| A1 | Global Path |
| B1 | Local Section |
| C1 | Obstacle |
| D1 | First Predictor |
| D2 | Second Predictor |
| G1 | First Target Path |
| G2 | Second Target Path |
| P1 | Passage Point |
| S1 | Starting Point |
| S2 | Goal Point |
| Rb1 | Robot (Control Target) |

**Claims**

1. A control system configured to perform motion control on a control target from a starting point through a goal point, the control system comprising:

   a first path generator configured to output, using first model predictive control, first path data about a first target path for the control target with respect to a global path leading from the starting point to the goal point, the first target path including at least one passage point;
   a second path generator configured to output, using second model predictive control, second path data based on the first path data, the second path data being data about a second target path for the control target with respect to each of a plurality of local sections, the plurality of local sections being defined by dividing the global path with respect to the at least one passage point; and
   a control unit configured to determine a manipulative variable with respect to the control target based on the second path data.

2. The control system of claim 1, wherein
   the first path generator is configured to:

determine a first prediction horizon corresponding to the first model predictive control to cause the first prediction horizon to have a horizon length equal to or longer than a horizon length based on a distance of the global path, a first sampling cycle of data based on a controlled variable output by the control target with respect to the global path, and a constraint on the control target; and
generate the first target path based on the first prediction horizon.

3. The control system of claim 2, wherein

the first path generator includes a first determiner configured to determine whether the first target path generated based on the first prediction horizon thus determined is reachable to the goal point, and
the first path generator is configured to repeatedly determine the first prediction horizon and generate the first target path a number of times until the first determiner determines that the first target path be reachable to the goal point.

4. The control system of any one of claims 1 to 3, wherein
the second path generator is configured to:

determine a second prediction horizon corresponding to the second model predictive control to cause the second prediction horizon to have a horizon length equal to or longer than a horizon length based on a distance of a corresponding local section belonging to the plurality of local sections, a second sampling cycle of data based on a controlled variable output by the control target with respect to the corresponding local section, and a constraint on the control target; and
generate the second target path based on the second prediction horizon.

5. The control system of claim 4, wherein

the second path generator includes a second determiner configured to determine whether the second target path generated based on the second prediction horizon thus determined is reachable to an end point of the corresponding local section, and
the second path generator is configured to repeatedly determine the second prediction horizon and generate the second target path a number of times until the second determiner determines that the second target path be reachable to the end point.

6. The control system of claim 5, wherein

the second path generator further includes a third determiner configured to, when the second determiner has determined that the second target path be reachable to the end point, determine whether the second target path is reachable to the goal point, and
the second path generator is configured to repeatedly determine the second prediction horizon and generate the second target path a number of times until the third determiner determines that the second target path be reachable to the goal point.

7. The control system of any one of claims 1 to 6, wherein

the first path generator is configured to generate the first target path based on a first prediction horizon corresponding to the first model predictive control,
the second path generator is configured to generate the second target path based on a second prediction horizon corresponding to the second model predictive control, and
a first prediction time length is longer than a second prediction time length,
the first prediction time length being based on not only the first prediction horizon but also a first sampling cycle of data based on a controlled variable output by the control target with respect to the global path, and
the second prediction time length being based on not only the second prediction horizon but also a second sampling cycle of data based on the controlled variable output by the control target with respect to each of the plurality of local sections.

8. The control system of any one of claims 1 to 7, wherein
a first sampling cycle of data based on a controlled variable output by the control target with respect to the global path is longer than a second sampling cycle of data based on the controlled variable output by the control target with respect to each of the plurality of local sections.

9. The control system of any one of claims 1 to 8, wherein
a first predictor applied to the first model predictive control is different from a second predictor applied to the second model predictive control.

10. The control system of claim 9, wherein
the second predictor is configured to predict the second target path with disturbance concerning vibration to be included in a controlled variable output by the control target taken into account.

11. The control system of any one of claims 1 to 10, wherein
the control target is an articulated robot.

12. The control system of any one of claims 1 to 11, wherein
a route leading from the starting point to the goal point includes a route designed to bypass either an obstacle or a specific space.

13. A control method for controlling a control system configured to perform motion control on a control target from a starting point through a goal point, the control method comprising:

a first path generating step including outputting, using first model predictive control, first path data about a first target path for the control target with respect to a global path leading from the starting point to the goal point, the first target path including at least one passage point;
a second path generating step including outputting, using second model predictive control, second path data based on the first path data, the second path data being data about a second target path for the control target with respect to each of a plurality of local sections, the plurality of local sections being defined by dividing the global path with respect to the at least one passage point; and
a control step including determining a manipulative variable with respect to the control target based on the second path data.

14. A program designed to cause one or more processors to perform the control method of claim 13.

FIG. 1

## FIG. 2

## FIG. 3

FIG. 4 A

FIG. 4 B

FIG. 4 C

*FIG. 5*

```
                  ┌─────────────┐
                  │    START    │
                  └─────────────┘
                         │
ST1                      ▼
     ┌───────────────────────────────────────┐
     │         Acquire command value          │
     └───────────────────────────────────────┘
ST2                      │
                         ▼
     ┌───────────────────────────────────────┐◄──────────┐
     │         Determine first parameter      │           │
     └───────────────────────────────────────┘           │
ST3                      │                                │
                         ▼                                │
     ┌───────────────────────────────────────┐           │
     │        Generate first target path      │           │
     └───────────────────────────────────────┘           │
                         │                                │
                         ▼                                │
ST4              ╱───────────────╲            No          │
            ╱──                      ──╲──────────────────┘
           ⟨      Goal point reachable?    ⟩
            ╲──                      ──╱
                 ╲───────────────╱
                         │ Yes
ST5                      ▼
     ┌───────────────────────────────────────┐
     │          Output first path data        │
     └───────────────────────────────────────┘
                         │
                         ▼
                  ┌─────────────┐
                  │     END     │
                  └─────────────┘
```

*FIG. 6*

## INTERNATIONAL SEARCH REPORT

| International application No. |
|---|
| **PCT/JP2024/002386** |

### A. CLASSIFICATION OF SUBJECT MATTER

*G05B 13/04*(2006.01)i; *B25J 9/10*(2006.01)i; *B25J 13/00*(2006.01)i
FI:  G05B13/04; B25J13/00 Z; B25J9/10 A

According to International Patent Classification (IPC) or to both national classification and IPC

### B. FIELDS SEARCHED

Minimum documentation searched (classification system followed by classification symbols)

G05B13/04; B25J9/10; B25J13/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2021-77089 A (MITSUBISHI HEAVY INDUSTRIES, LTD.) 20 May 2021 (2021-05-20) paragraphs [0014]-[0076], fig. 1-10 | 1-14 |
| Y | CN 111338340 A (TIANJIN UNIVERSITY) 26 June 2020 (2020-06-26) paragraphs [0058]-[0122], fig. 1-11 | 1-14 |

☐ Further documents are listed in the continuation of Box C.          ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **14 March 2024** | **02 April 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
Information on patent family members

International application No.

**PCT/JP2024/002386**

| Patent document cited in search report | | | Publication date (day/month/year) | Patent family member(s) | Publication date (day/month/year) |
|---|---|---|---|---|---|
| JP | 2021-77089 | A | 20 May 2021 | (Family: none) | |
| CN | 111338340 | A | 26 June 2020 | (Family: none) | |

Form PCT/ISA/210 (patent family annex) (July 2022)

**EP 4 679 201 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020040205 A